# EUROPÄISCHE PATENTANMELDUNG

(11) **EP 2 258 621 A1**
(43) Veröffentlichungstag der Anmeldung: **08.12.2010**
(21) Anmeldenummer: 10164900.2
(22) Anmeldetag: 04.06.2010
(51) Int. Cl.: B65B 25/08, B26D 7/30, G01G 19/414

(54) **Verpackungsmaschine für Lebensmittel**

(30) Priorität: 05.06.2009 AT 8752009
(71) Anmelder: Kuchler, Fritz, A-9020 Klagenfurt (AT)
(72) Erfinder: Kuchler, Fritz, A-9020 Klagenfurt (AT)
(74) Vertreter: Müllner, Martin

(57) **Zusammenfassung**

Eine Verpackungsmaschine (1) für Lebensmittel, beispielsweise für die von einer Schneidemaschine an einer Theke geschnittenen Wurstscheiben (19, 21), weist im Auflegebereich (15) eine Waage (2) auf. Ein Display (3) informiert während des Auflegens fortlaufend über das Gewicht. Über einen handbetätigbaren Auslöser (4) wird die Schweißeinrichtung (5) zum Verschweißen einer Unterlagsfolie (18) mit einer Deckfolie (22) bei Zustimmung des Kunden nach Hinzufügen oder Wegnehmen von Wurstscheiben (19, 21) gestartet und gleichzeitig ein Aufkleber mit Gewichts- und Preisinformation in einem Drucker (6) bereitgestellt. Die Verpackungsmaschine (1) kann auch mehrere sortenbezogene, durch Taster (12, 13, 14) zuschaltbare Speicher (9, 10, 11) enthalten, die bei Verpackung eines Aufschnitts aus mehreren Wurstsorten die Einzelgewichte speichern und bei Betätigung des Auslösers (4) diese Einzelinformationen von Sorte, Gewicht und Preis zeitgleich mit dem Starten der Schweißeinrichtung an den Drucker (6) geben.

## Beschreibung

### Technisches Gebiet

Die Erfindung betrifft eine Verpackungsmaschine für Lebensmittel, wie beispielsweise für Wurstscheiben, die von einer Schneidemaschine geschnitten wurden, mit einem Auflegebereich, verschweißbaren Unterlags- und Deckfolien, einer Schweißeinrichtung und einer Waage, gegebenenfalls zur Ansteuerung eines Druckers, insbesondere für Gewicht und Preis.

### Stand der Technik

Es sind industrielle Verpackungsmaschinen bekannt und auch solche, die im Thekenbereich unmittelbar vor den Kunden zum Einsatz kommen. In einer Delikatessenabteilung wählt der Kunde etwa eine Wurstsorte bzw. Schnittgutsorte aus und bestellt eine Portion durch Angabe eines Wunschgewichtes, z.B. 100 g. Bei einer bekannten Verpackungsmaschine für den Thekenbereich wird das geschnittene Gut von der Schneidemaschine, die durchaus einfachster Bauart sein kann, auf eine Unterlagsfolie im Auflegebereich gelegt. Es wird eine Deckfolie darübergelegt und dann wird der Schweißvorgang gestartet. Bei einer weiteren Ausführung wird das Schnittgut mit den Folien durch ein Förderband in eine Schweißposition gebracht und aus der Förderebene durch einen Stempel gegen einen elektrisch beheizten Schweißrahmen angehoben. Es erfolgt so die Verschweißung. Das Päckchen wird aus der Schweißstation ausgeworfen und gelangt auf eine Waage, die einen Etikettendrucker anspeist. Das verschlossene Päckchen wird gewogen und zugleich mit dem Auswerfen etikettiert. Der Drucker erhält einerseits die Gewichtsinformation und den von einem Rechner ermittelten Preis für die Portion der speziellen Ware.

Aus der EP 1260327 A ist in diesem Sinn eine Schweißstation bekannt, die über eine Folienzufuhr für Unterlagsfolien und für Deckfolien sowie über eine Folienschneidestation verfügt. Ein Förderband führt die Schnittgutscheiben vom Auflegebereich einer Aufschnittschneidemaschine weg zu der nebenstehenden Schweißstation. Im Anschluss an diese kann die verschweißte Verpackung gewogen und etikettiert werden.

Aus der AT 500725 B ist eine Schweißeinrichtung bekannt, die als eigenständige Vorrichtung, aber auch auf Grund ihrer speziellen Konstruktion auch unmittelbar im Auflegebereich einer Aufschnittschneidemaschine angeordnet sein kann. Der rechteckige Andruckrahmen für die Folien, die randseitig verschweißt werden sollen, wird von umklappbaren Leisten gebildet, die in der hochgeklappten Stellung einen freien Zugang zur Ablegefläche erlauben und die zum Verschweißen mit der Deckfolie umklappbar sind.

### Kurzbeschreibung der Erfindung

Die Erfindung geht davon aus, dass es in den Delikatessenläden eine Vielzahl einfacher Schneidemaschinen im Thekenbereich gibt und dass eine unabhängige Verpackungsmaschine für die von der Schneidemaschine händisch entnommenen Scheiben als "stand alone"-Gerät vorteilhaft wäre.

Es wurde erkannt, dass eine Gewichtskontrolle entsprechend der Bestellung des jeweiligen Kunden zweckmäßig ist und auch die Möglichkeit eröffnet werden sollte, verschiedene Schnittgutsorten gleichzeitig zu verpacken. Dies wird mit einer Verpackungsmaschine der eingangs beschriebenen Art dadurch erreicht, dass die Waage in den Auflegebereich integriert ist und ein Display zur Anzeige des während des individuellen Auflegens permanent erfassten und angezeigten Gewichtes aufweist und dass ein vorzugsweise handbetätigbarer Auslöser für das Starten der Schweißeinrichtung bei Erreichen des gewünschten Portionsgewichtes durch Hinzufügen oder Wegnehmen von Wurstscheiben vorgesehen ist. Es wird also unmittelbar auf der neben der Schneidemaschine auf der Theke des Lebensmittelgeschäftes stehenden neuen Verpackungsmaschine gewogen, und zwar vor dem Verpacken, wenn der Kunde noch Einfluss nehmen kann auf die Portionsmenge und der Verkäufer dem Wunschziel durch Hinzufügen oder Wegnehmen von Wurstscheiben entsprechen kann. Erst dann erfolgt das Verschweißen durch Betätigen der "OK"-Taste, also des Auslösers für den Schweißvorgang. Inzwischen und parallel dazu wird der Aufkleber mit der Gewichts- und Preisinformation gedruckt und kann - ohne Zeitverzögerung - auf die Packung aufgebracht werden.

Hinsichtlich der erforderlichen Genauigkeit ist es zweckmäßig, wenn die Waage innerhalb des Auflegebereichs thermisch und mechanisch von der Verpackungsmaschine entkoppelt ist, insbesondere von der Randzone des Auflegebereichs, die die Schweißeinrichtung umfasst, isoliert bzw. durch einen Luftspalt distanziert ist. Auf diese Weise wird eine Beeinträchtigung durch Wärmeleitung von der Schweißeinrichtung auf die Waage verhindert und auch eine allfällige Materialausdehnung im Bereich der Schweißeinrichtung von der Waage ferngehalten. Der durch aufeinander gleitende Dichtlippen gesicherte Luftspalt nimmt solche Materialdehnungen auf und schirmt ferner von Erschütterungen durch das Schließen und Öffnen der z.B. als Leisten ausgebildeten Schweißbacken ab.

Bei einer konkreten Ausführung ist die Waage mit einer akustischen Signaleinrichtung zur Abgabe eines Piepstones oder dergleichen jeweils nach einem voreinstellbaren Gewicht von z.B. 50 Gramm ausgestattet. Der Verkäufer muss dann keinen Blick auf das Display werfen, sondern es genügt die laufende akustische Gewichtsinformation, z.B. dass beim zweiten Piepton 100 g erreicht sind.

Sobald der Kunde durch Augenschein die aufgelegte Menge als ausreichend identifiziert und dies dem Verkäufer mitteilt oder wenn der Verkäufer durch Auflegen oder Wegnehmen einem Ziel entsprochen hat, betätigt der Verkäufer den Auslöser. Es ist zweckmäßig, wenn der Auslöser als Taster ausgebildet ist, der den Signalausgang der Waage an den Eingang des Druckers legt, zur Bereitstellung eines Aufklebers mit dem auf Kundenwunsch aufgelegten Portionsgewicht und dem über einen Rechner ermittelten Preis.

Die Verpackungsmaschine kann auch so gestaltet sein, dass an der Verpackungsmaschine ein Sollgewicht einstellbar ist und beim kontinuierlichen händischen Auflegen von Wurstscheiben ein Signal von der Waage an den Auslöser zum Starten der Schweißeinrichtung und zum Verschweißen der Unterlags- und Deckfolie zuführbar ist, sobald das Sollgewicht beim Auflegen erreicht und vorzugsweise durch einen Piepston bestätigt ist. Der Verkäufer erhält dann ein akustisches Signal, wenn die Zielmenge erreicht ist, und im letztgenannten Fall wird ohne Zutun die Schweißeinrichtung gestartet. Dies ist vorteilhaft, weil ja die Scheiben frisch geschnitten werden und sich der Verkäufer auf den von ihm durchgeführten Schneidevorgang konzentriert. Die erfindungsgemäße Maschine bietet einen weiteren praxisgerechten Vorteil hinsichtlich eines "Multipack", also einer Verpackung, die gleich mehrere Wurstsorten jeweils in der gewünschten Menge, aufnimmt.

Dies wird dadurch erreicht, dass für das Verschweißen einer Packung mit unterschiedlichen Wurstsorten gegebenenfalls unter Zwischenlage von Trennfolien der Waage innerhalb der Verpackungsmaschine mehrere Speicher mit jeweils einem Taster zur Aktivierung und Übernahme des Wiegeergebnisses in den Speicher zugeordnet sind und dass der Auslöser sowohl die Schweißeinrichtung aktiviert als auch die Signale der gespeicherten Individualgewichte sowie für die Preise und allenfalls für das Gesamtgewicht und für den Gesamtpreis der Packung an den Drucker legt.

Der Verkäufer legt in ständigem Kontakt und in Abstimmung mit dem Kunden eine Schnittgutsorte bis zur gewünschten Menge auf die Unterlagsfolie im Auflegebereich der Verpackungsmaschine, drückt die Speichertaste für diese Wurstsorte, legt eine Zwischenfolie ein und fährt mit der nächsten Wurstsorte fort. Am Ende liegt ein Aufschnitt auf der Unterlagsfolie von beispielsweise drei Sorten, jeweils durch Zwischenfolien getrennt. Es wird die Deckfolie darübergelegt und der Auslöser für das Verschweißen betätigt. Dadurch wird nicht nur ein Päckchen mit mehreren Sorten hergestellt (Wurst bzw. Käse bzw. allenfalls auch nicht maschinell geschnittene Ware wie Leberpastete oder einen Origanozweig respektive frische Gewürzblätter), sondern in technischer Hinsicht erfolgt das Verschweißen und das Drucken des Aufklebers - anders als bisher - zugleich, wodurch die Verpackungsmaschine viel schneller arbeitet und mehr Zeit für den Kundenkontakt zur Verfügung steht.

### Kurze Beschreibung der Zeichnungsfiguren

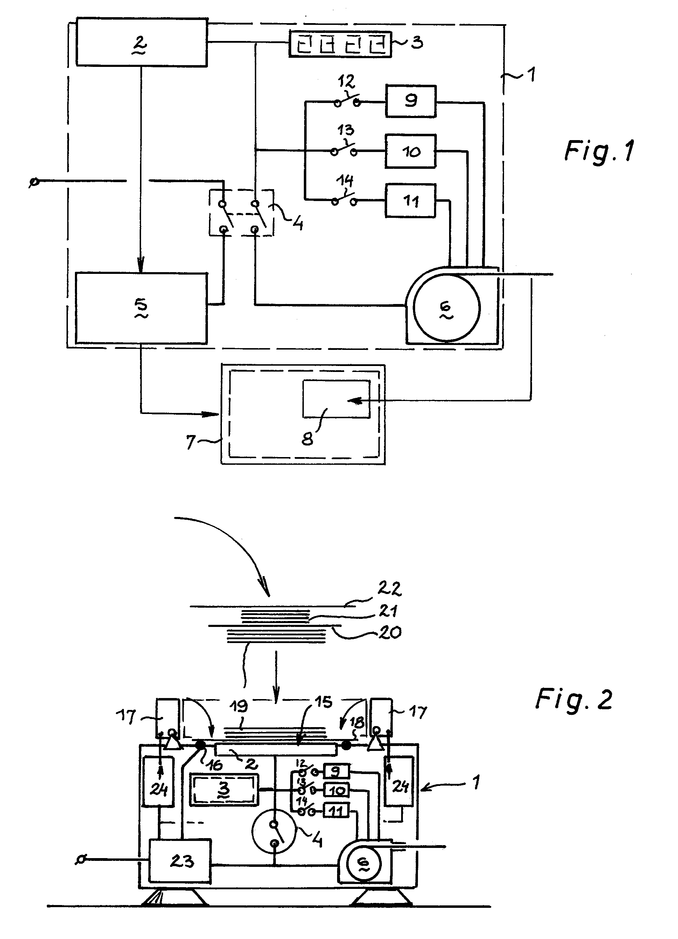

Ausführungsbeispiele des Erfindungsgegenstandes sind in den Zeichnungen dargestellt. Fig. 1 zeigt ein Blockschaltbild zur erfindungsgemäßen Verpackungsmaschine und Fig. 2 eine Prinzipdarstellung für eine konkrete Ausführungsform.

### Beschreibung der Ausführungsarten

Im Rahmen einer Verpackungsmaschine 1 (Fig. 2) ist eine Waage 2 in den Auflegebereich integriert. Die Waage 2 ist mit einem Display 3 zur Gewichtsanzeige verbunden. Ferner ist ein als Taster ausgebildeter Auslöser 4 vorgesehen, der im Anschluss an den Wiegevorgang bei Zustimmung des Kunden zum Portionsgewicht betätigt wird und dessen Signal mittelbar oder unmittelbar die Schweißeinrichtung 5 aktiviert. Dies ist in Fig. 1 durch einen Auslöser 4 dargestellt, der über Netzspannungskontakte die Schweißeinrichtung 5 in Betrieb nimmt, wie diese beispielsweise in Fig. 2 dargestellt ist. Der Auslöser 4 legt damit zugleich das Wiegeergebnis an einen Ausgang der Verpackungsmaschine 1 (für einen externen Etikettendrucker) oder beaufschlagt zeitgleich einen eingebauten Drucker 6, der sowohl aktiviert als auch mit der Druckerinformation (Gewicht, allenfalls Schnittgutsorte) versorgt wird. Es liegt somit eine verschweißte Packung 7 und ein Aufkleber 8 vor, der vom Verkäufer an der Packung 7 angebracht werden kann. Dann wird die Packung 7 dem Kunden übergeben. Natürlich kann die Information an die Kassa zur Endabrechnung mit dem Kunden weitergeleitet werden.

In den Fig. 1 und 2 ist eine besondere Möglichkeit dargestellt, nämlich das Verpacken mehrerer Sorten in eine verschweißte Packung. Dazu ist das Wiegeergebnis in jeweils einer Wurstsorte zugeordneten Speichern 9, 10, 11 zwischenspeicherbar, wenn die jeweilige Taste 12, 13, 14 bei Übereinstimmung mit dem Kunden vom Verkäufer betätigt wird. Sobald der Auslöser 4 gedrückt wird, starten die Schweißeinrichtung 5 und zugleich der Drucker 6, der die Daten bezüglich der Sorten und das jeweilige Gewicht (sowie den Einzel- und Gesamtpreis) aus den Zwischenspeichern 9, 10, 11 erhält. Wie beschrieben wird die Schweißeinrichtung 5 zugleich aktiviert, sodass mit der Packung 7 auch schon der Aufkleber 8 mit der Summe der Einzelinformationen sowie die Gesamtpreisinformation vorliegt.

In Fig. 2 ist die Verpackungsmaschine 1 in einem Ausführungsbeispiel dem Prinzip nach dargestellt. Die Waage 2 ist unmittelbar im Auflegebereich 15 vorgesehen, der als Schweißeinrichtung 5 am Rand des Auflegebereichs 15 einen oder mehrere umlaufende Schweißdrähte 16 und zum Andrücken rundherum umklappbare Leisten 17 aufweist. Der Auflegebereich 15 wird zuerst mit einer Unterlagsfolie 18 abgedeckt, dann legt der Verkäufer nach und nach Scheiben 19 einer ersten Wurstsorte auf. Das Gewicht erscheint am Display 3. Ist der Kunde mit der Menge einverstanden, dann wird der Taster 12 betätigt. Eine Zwischenfolie 20 kommt über die Scheiben 19. Scheiben 21 einer anderen Wurstsorte werden darübergelegt und bei Zustimmung des Kunden die Taste 13 gedrückt und das Einzelergebnis im sortenspezifischen Speicher 10 (Zwischenspeicher mit Produkt- und Kilopreisinformation) abgelegt. In der Darstellung ist noch ein weiterer Speicher 11 für eine dritte Wurstsorte dargestellt. Wenn der Kunde keine weiteren Wünsche mehr hat, wird eine Deckfolie 22 darübergelegt und der Auslöser 4 betätigt. Dieses Signal aktiviert die Schweißeinrichtung und den Drucker 6 gleichzeitig. Die Schweißeinrichtung umfasst gemäß Fig. 2 ein Steuergerät 23, das einerseits die Schweißdrähte 16 an Spannung legt und die Leisten 17 durch Aktivierung von Stellmotoren 24 in Pfeilrichtung umklappt. Dadurch wird die Deckfolie 22 gegen die Unterlagsfolie 18 und gegen den erhitzten Schweißdraht 16 gedrückt. Das Paket wird randseitig vollständig verschweißt. Es können bei Bedarf auch die Trennfolien (beispielsweise nur an drei Seiten zur Bildung eines Säckchens) mitgeschweißt werden. Das Steuergerät 23 erkennt über den Stromfluss und über gegebenenfalls vorgesehene Sensoren, wann der Schweißvorgang abgeschlossen ist und reversiert die Stellmotoren 24 zum Öffnen der Leisten 17. Die Packung kann entnommen werden. Der Aufkleber wurde vom Drucker 6 schon längst festgestellt und kann an der Packung angebracht werden.

Es steht somit eine äußerst kompakte Verpackungsmaschine zur Verfügung, bei der das Schnittgut nicht von einer Station zur anderen transportiert wird und die auf jeder Theke, auf der Schnittgut auch mit den einfachsten Mitteln geschnitten wird, sinnvoll und zeitgemäß zum Einsatz kommen kann. Die Anordnung gestattet die volle Einflussnahme von Seiten des Kunden. Ferner ist die Möglichkeit gegeben, die Scheiben mehrerer Wurstsorten in nur einer Packung einzuschweißen und dennoch die Einzelgewichte und die Sorteninformationen auszudrucken. In technischer Hinsicht ergibt sich ein besonders rascher Zyklus, weil die Schritte des Verschweißens und Druckens eines Aufklebers zugleich erfolgen.

Erwähnt sei noch, dass als Zusatzeinrichtung ein Rollenhalter für Unterlags- und Deckfolien sowie für Zwischenfolien mit Schneidevorrichtung beigestellt oder an die Verpackungsmaschine angebaut sein kann. Es kann aber auch ein Folienspender mit vorgeschnittenen Größen für Unterlags- und Deckfolien sowie allenfalls auch für Zwischenfolien (auch aus Zellstoffmaterial) vorgesehen sein.

## Patentansprüche

1. Verpackungsmaschine (1) für Lebensmittel, wie beispielsweise für Wurstscheiben (19, 21), die von einer Schneidemaschine geschnitten wurden, mit einem Auflegebereich (15), verschweißbaren Unterlags- (18) und Deckfolien (22), einer Schweißeinrichtung (5) und einer Waage (2), gegebenenfalls zur Ansteuerung eines Druckers (6), insbesondere für Gewicht und Preis, **dadurch gekennzeichnet, dass** die Waage (2) in den Auflegebereich (15) integriert ist und ein Display (3) zur Anzeige des während des individuellen Auflegens permanent erfassten und angezeigten Gewichtes aufweist und dass ein vorzugsweise handbetätigbarer Auslöser (4) für das Starten der Schweißeinrichtung (5) bei Erreichen des gewünschten Portionsgewichtes durch Hinzufügen oder Wegnehmen von Wurstscheiben (19, 21) vorgesehen ist.

2. Verpackungsmaschine nach Anspruch 1, **dadurch gekennzeichnet, dass** die Waage (2) innerhalb des Auflegebereichs (15) thermisch und mechanisch von der Verpackungsmaschine (1) entkoppelt ist, insbesondere von der Randzone des Auflegebereichs (15), die die Schweißeinrichtung umfasst, isoliert bzw. durch einen Luftspalt distanziert ist.

3. Verpackungsmaschine nach Anspruch 1, **dadurch gekennzeichnet, dass** die Waage (2) mit einer akustischen Signaleinrichtung zur Abgabe eines Piepstones oder dergleichen jeweils nach einem voreinstellbaren Gewicht von z.B. 50 Gramm ausgestattet ist.

4. Verpackungsmaschine nach einem der Ansprüche 1 bis 3, **dadurch gekennzeichnet, dass** der Auslöser (4) als Taster ausgebildet ist, der den Signalausgang der Waage (2) an den Eingang des Druckers (6) legt, zur Bereitstellung eines Aufklebers (8) mit dem auf Kundenwunsch aufgelegten Portionsgewicht und dem über einen Rechner ermittelten Preis.

5. Verpackungsmaschine nach einem der Ansprüche 1 bis 4, **dadurch gekennzeichnet, dass** an der Verpackungsmaschine (1) ein Sollgewicht einstellbar ist und beim kontinuierlichen händischen Auflegen von Wurstscheiben (19, 21) ein Signal von der Waage (2) an den Auslöser (4) zum Starten der Schweißeinrichtung (5) und zum Verschweißen der Unterlags- (18) und Deckfolie (22) zuführbar ist, sobald das Sollgewicht beim Auflegen erreicht und vorzugsweise durch einen Piepston bestätigt ist.

6. Verpackungsmaschine nach einem der Ansprüche 1 bis 5, **dadurch gekennzeichnet, dass** für das Verschweißen einer Packung mit unterschiedlichen Wurstsorten, gegebenenfalls unter Zwischenlage von Trennfolien (20), der Waage (2) innerhalb der Verpackungsmaschine (1) mehrere Speicher (9, 10, 11) mit jeweils einem Taster (12, 13, 14) zur Aktivierung und Übernahme des Wiegeergebnisses in den Speicher (9, 10, 11) zugeordnet sind und dass der Auslöser (4) sowohl die Schweißeinrichtung (5) aktiviert als auch die Signale der gespeicherten Individualgewichte sowie für die Preise und allenfalls für das Gesamtgewicht und für den Gesamtpreis der Packung an den Drucker (6) legt.
